# EUROPEAN PATENT SPECIFICATION

(11) **EP 2 363 513 B1**
(45) Date of publication and mention of the grant of the patent: **18.06.2014**
(21) Application number: 10193044.4
(22) Date of filing: 30.11.2010
(51) Int. Cl.: C23C 18/16, C23C 18/20, C25D 5/56, C08K 3/22, C08J 7/12

(54) **Metalized plastic articles and method of producing the same**
Metallisierte Kunststoffartikel und Herstellungsverfahren dafür
Articles plastiques métallisés et leur procédé de production

(30) Priority: 26.02.2010 CN 201010117125
(43) Date of publication of application: 07.09.2011
(60) Divisional application: 13177928.2
(73) Proprietor: Byd Company Limited, Shenzhen 518118 (CN)
(72) Inventor: Gong, Qing, 518118, Shenzhen (CN); Zhou, Liang, 518118, Shenzhen (CN); Miao, Weifeng, 518118, Shenzhen (CN); Zhang, Xiong, 518118, Shenzhen (CN)
(74) Representative: Gulde & Partner

(56) References cited:
- EP-A1- 1 650 249
- WO-A1-2011/072506
- RU-C1- 2 192 715
- RU-C2- 2 188 879
- US-A1- 2004 241 422
- US-A1- 2005 064 711
- US-A1- 2007 014 975

## Description

### FIELD

The present disclosure relates generally to plastic articles. In more particularity, the present disclosure relates to a surface metalization method for producing the same.

### BACKGROUND

Metalization, also spelled metallization, is the process in which a non-metal substrate, such as a plastic, is coated, deposited, or otherwise provided, with a metallic layer or plating. Without wishing to be bound by the theory, Applicant believes that the metalization process may improve the substrates' ability to transmit, or otherwise transfer, electric and/or magnetic signals.

Plastic substrates having a metalized layer on their surfaces as pathways of electromagnetic signal conduction are widely used in automobiles, industries, computers and telecommunications etc. Selectively forming a metalized layer is one of the important processes for preparing such plastic products. The method for forming a metalized layer in prior art is usually practiced by forming a metal core as a catalytic center on the plastic support surface so that chemical plating may be performed. However, processes related thereto are complex where strict demand on equipment is needed whereas the energy consumption is high. Further, there is a low adhesive force between the coating and the plastic support.

RU 2 192 715 C1 and RU 2 188 879 C2 disclose a method of metallization of an insulating substrate which is composed of crystalline or amorphous copper borates CuB₂O₄ and Cu₃B₂O₄. This substrate is covered with a layer of glycerine which is subsequently covered by a covering of polyethylene terephthalate that is transparent for a laser beam. Upon irradiating with the laser beam through the covering the glycerine is burnt thus creating a hydrocarbon-containing atmosphere which reduces the copper cations at the surface of the substrate to form a metal layer of copper.

US 2007/0014975 A1 discloses a method of metallization a plastic substrate comprising a plastic and photocatalyst particles (titanium oxide, zinc oxide, zirconium oxide, cadmium oxide, potassium tantalite or cadmium selenide) dispersed in the plastic. After molding the plastic substrate, the surface is irradiated with ultraviolet light to partially expose the photocatalyst particles. By a photochemical reduction precipitation step applying a second UV irradiation, a film of copper, gold or platinum is formed onto to exposed photocatalyst particles and subsequently a conductive film of the same materials is formed onto the irradiated surface by electroplating.

WO 2011/072506 A1 discloses a method of metalizing a plastic substrate comprising a plastic substrate including a plastic supporting material and an electroless plating promoter (for instance CuB₂O₄ or NiB₂O₄). The method comprises irradiating a surface of the plastic substrate to expose at least the electroless plating promoter; electroless plating a layer of copper or nickel on the irradiated surface; followed by electroplating or electroless plating a further metal layer thereon.

### SUMMARY

In this regard, there remains a requirement to provide a method for preparing a plastic article, in which the plastic metalization is easily performed with lower energy consumption and enhanced adhesive force between the metal layer and the plastic support.

In accordance with various illustrative embodiments hereinafter disclosed are methods of metalizing a plastic substrate. The method includes providing a plastic substrate comprising a plastic and at least one accelerator dispersed in the plastic. The at least one accelerator is represented by the general formula AMₓB_{y}O_{z}, wherein: A is one or more elements selected from groups 10 and 11 of the Element Periodic Table; M is one or more metal elements in three plus (i.e. having an oxidation number of +III) selected from the group consisting of Fe, Co, Mn, Al, Ga, In, TI, and rare earth elements; and O is oxygen; and x=0-2, y=0.01-2; z=1-4; and wherein formula AMₓB_{y}O_{z} excludes CuB₂O₄ and NiB₂O₄. The method includes the step of irradiating a surface of a plastic substrate, optionally by a laser irradiation, to expose at least a first accelerator of the at least one accelerator. The method further includes plating the irradiated surface of the plastic substrate to form at least a first metal layer on the irradiated surface, and then plating the first metal layer to form at least a second metal layer on the first metal layer.

In accordance with another illustrative embodiment hereinafter disclosed are plastic articles comprising: a plastic substrate comprising a plastic and at least one accelerator, at least a first metal layer and a second metal layer plated onto the plastic substrate. The at least one accelerator is represented by general formula AMₓB_{y}O_{z}, wherein A is one or more elements selected from groups 10 and 11 of the Element Periodic Table; M is one or more metal elements in three plus (i.e. having an oxidation number of +III) selected from the group consisting of Fe, Co, Mn, Al, Ga, In, TI, and rare earth elements; and O is oxygen; and x=0-2, y=0.01-2; z=1-4; and excluding CuB₂O₄ and NiB₂O₄.

As found by the inventors, selectively chemical plating may be directly performed on the surface containing the at least one accelerator, and the plastic will not be degraded by the accelerator/s represented by the general formula AMₓB_{y}O_{z} without reducing metal oxides into pure metals. According to an embodiment of the disclosure, the at least one accelerator may be distributed evenly in the plastic substrate, and a predetermined area on the surface of the plastic substrate which may be gasified by, for example, laser to expose the accelerator/s so that the accelerators may be reduced into pure metal without high energy consumption. And further electroplating or chemical plating may be performed to form the desired metalized layer, thus achieving the selective surface metalization with simple process, lower energy consumption and reduced cost.

In addition, the at least one accelerator may be evenly distributed in the plastic substrate, so that the adhesive force between the coating layer and the plastic substrate after chemical plating is high, thus improving the quality of the plastic article as manufactured therefrom.

Additional aspects and advantages of the embodiments of present disclosure will be given in part in the following descriptions, become apparent in part from the following descriptions, or be learned from the practice of the embodiments of the present disclosure.

### DETAILED DISCRIPTION OF THE EMBODIMENT

Reference will be made in detail to embodiments of the present disclosure. The embodiments described herein are explanatory, illustrative, and used to generally understand the present disclosure. The embodiments shall not be construed to limit the present disclosure.

In an illustrative, non-limiting, embodiment of the present disclosure, a method of metalizing a plastic substrate is provided. The method may include providing a plastic substrate having a plastic and one or more accelerator/s dispersed in the plastic. The accelerator has a formula AMₓB_{y}O_{z}, wherein: A is one or more elements selected from groups 10 and 11 of the Element Periodic Table; M is one or more metal elements in three plus selected from the group consisting of Fe, Co, Mn, Al, Ga, In, TI, and rare earth elements; and O is oxygen; and x=0-2, y=0.01-2; z=1-4; and excluding CuB₂O₄ and NiB₂O₄. The method includes the step of irradiating a surface of a plastic substrate, optionally by a laser irradiation, to expose at least a first accelerator. The method further includes plating the irradiated surface of the plastic substrate to form at least a first metal layer on the at least first accelerator, and then plating the first metal layer to form at least a second metal layer.

### Accelerators

According to the invention, the at least one accelerator has the formula AMₓB_{y}O_{z}, wherein: A is one or more elements selected from groups 10 and 11 of the Element Periodic Table; M is one or more metal elements in three plus selected from the group consisting of Fe, Co, Mn, Al, Ga, In, TI, and rare earth elements; and O is oxygen; and x=0-2, y=0.01-2; z=1-4; and excluding CuB₂O₄ and NiB₂O₄. Particularly suitable accelerators may include: CuFe_{0.5}B_{0.5}O_{2.5}, CuNi_{0.5}B_{0.5}O_{2.5}, CuAl_{0.5}B_{0.5}O_{2.5}, CuGa_{0.5}B_{0.5}O_{2.5}, or CuB_{0.7}O₂.

Without wishing to be bound by the theory, Applicant believes that accelerators with the general formula of AMₓB_{y}O_{z} may favor a direct metal-plating, for instance copper-plating or nickel-plating, and serve to avoid, or otherwise mitigate, plastic degradation.

In a non-limiting embodiment, the average diameter of the accelerator/s may range from about 20 nanometers to about 100 microns, alternatively from about 50 nanometers to about 10 microns, and alternatively from about 200 nanometers to about 4 microns. The accelerators may be from about 1 wt% to about 40 wt% of the plastic substrate, alternatively from about 1 wt% to about 30 wt%, and alternatively from about 2 wt% to about 15 wt%.

In a further illustrative, non-limiting, embodiment, the at least one accelerator may be uniformly dispersed within the plastic. Without wishing to be bound by the theory, Applicant believes that a uniform dispersion of accelerators in the plastic aides in forming a strong adhesion between the metal layer and the plastic substrate.

Methods of preparing suitable accelerators are generally known. In one non-limiting example, a method for preparing CuGa_{0.5}B_{0.5}O_{2.5} comprises the steps of: mixing and ball milling 58g of CuO , 34g of Ga₂O₃ and 14g of B₂O₃ powders; calcining the powders at a temperature of about 1000 degrees centigrade (°C) for about 2 hours to form the accelerator with an average particle diameter of about 1.0 micron to about 2.5 microns. The accelerator obtained in this way has a composition of CuGa_{0.5}B_{0.5}O_{2.5} as tested by ICP-AES.

It is shown by a lot of research that, except that pure Cu and Pd may be used as the nucleus or grain for chemical plating, nano-CuO can improve the chemical deposition speed of the metal atoms on plastic surface during chemical plating. It has been found by the inventors that nano-CuO particles (commercially available from Aladin Reagent Co., Ltd) with an average particle size of about 40 nm in a normal chemical plating solution may cause a fast deposition of Cu on the surface of nano-CuO particles. However, nano-CuO may also cause the degradation of the plastic. By many experiments, it has been found by the inventors that the accelerators represented by the general formula of AMxB_{y}O_{z} may be used for surface treatment, and such accelerators may promote the chemical deposition of chemical plating on plastic surfaces without causing the degradation of the plastic while remaining in the plastic for a long time.

According to an embodiment of the disclosure, the accelerator may be evenly distributed in the plastic, the adhesive force between the accelerator and the plastic substrate is very high so that the following chemical plating may be performed on the surface of the accelerator directly. As a result, the adhesive force between the formed coating layer and the plastic substrate may be increased tremendously.

### Plastic

In an illustrative, non-limiting, embodiment, the plastic may be a thermoplastic plastic, or thermoset otherwise called a thermosetting plastic. The thermoplastic plastic may be selected from the group consisting of polyolefins, polycarbonates (PC), polyesters, polyamides, polyaromatic ethers, polyester-imides, polycarbonate/acrylonitrile-butadiene-styrene composite (PC/ABS), polyphenylene oxide (PPO), polyphenylene sulfide (PPS), polyimides (PI), polysulfones (PSU), poly (ether ether ketone) (PEEK), polybenzimidazole (PBI), liquid crystalline polymer (LCP) and any combination thereof. The polyolefins may be selected from polystyrene (PS), polypropylene (PP), polymethyl methacrylate (PMMA) or poly(acrylonitrile-butadiene-styrene) (ABS). The polyesters may be selected from polycyclohexylene dimethylene terephthalate (PCT), poly(diallyl isophthalate) (PDAIP), poly(diallyl phthalate) (PDAP), polybutylene naphthalate (PBN), Poly(ethylene terephthalate) (PET), or polybutylene terephthalate (PBT). The polyamides may be selected from polyhexamethylene adipamide (PA-66), poly(hexamethylene azelamide) (PA-69), polyhexamethylene succinamide (PA-64), poly(hexamethylene dodecanoamide) (PA-612), poly(hexamethylene sebacamide) (PA-610), poly(decametylene sebacamide) (PA-1010), polyundecanoamide (PA-11), polydodecanoamide (PA-12), polycapryllactam (PA-8), polyazelamide (PA-9), polycaprolactam (PA-6), poly(p-phenytene terephthalamide) (PPTA), poly-m-xylylene adipamide (MXD6), polyhexamethylene terephthalamide (PA6T), or poly(nonamethylene terephthalamide) (PA9T). The liquid crystalline polymer (LCP) may be a polymer comprising rigid chains and being capable of forming regions of highly ordered structure in the liquid phase. The thermosetting resin includes a material selected from the group consisting of phenolic resin, urea-formaldehyde resin, melamine-formaldehyde resin, epoxy resin, alkyd resin, polyurethane and any combination thereof.

### Dispersion of Accelerator(s) in Plastic

In an illustrative, non-limiting, embodiment, the accelerator(s) may be dispersed within the plastic by any method of mixture or combination, followed, without limitation, by an optional molding process. In various embodiments, the accelerator(s) may become dispersed in the plastic by using an internal mixer, a singer screw extruder, a twin screw extruder or a mixer. In various embodiments, the term "plastic substrate" means a plastic having accelerator(s) disposed, or dispersed, therein. Following, dispersion of the accelerator(s) in the plastic, the plastic substrate may be formed into various kinds of shapes during an injection molding, blow molding, extraction molding, or hot press molding processes.

### Additives

In illustrative, non-limiting, embodiments, the plastic substrate may further comprise one or more generally known, and commercially available, additives selected from the group consisting of: an antioxidant; a light stabilizer; a lubricant; and inorganic fillers. In a non-limiting embodiment, the antioxidant may be antioxidant 1098, 1076, 1010, 168 available from Chemical Industries Basel Co., located in or near Basel, Switzerland. The antioxidant may be about 0.01 wt% to about 2 wt% of the plastic substrate.

The light stabilizer may be any such commercially available product, including a hindered amine light stabilizer, such as light stabilizer 944 available from Chemical Industries Basel Co., located in or near Basel, Switzerland. The light stabilizer may be about 0.01 wt% to about 2 wt% of the plastic substrate.

In a non-limiting embodiment, the lubricant may be selected from the group consisting of: methylpolysiloxanes; EVA waxes formed from ethylene and vinyl acetate; polyethylene waxes; stearates; and combinations thereof. The lubricant may be about 0.01 wt% to about 2 wt% of the plastic substrate.

In a non-limiting embodiment, the inorganic filler may be talcum powders, calcium carbonates, glass fibers, calcium carbonate fibers, tin oxides, or carbon blacks. In further embodiments, the inorganic filler may further selected from the group consisting of glass beads, calcium sulfates, barium sulfates, titanium dioxides, pearl powders, wollastonites, diatomites, kaolins, pulverized coals, pottery clays, micas, oil shale ashes, aluminosilicates, aluminas, carbon fibers, silicon dioxides, zinc oxides, and combinations thereof, particularly those without harmful elements (Cr, etc) to the environment and human health. The inorganic filler may be about 1 wt% to about 70 wt% of the plastic substrate.

### Irradiation

In an illustrative, non-limiting, embodiment, a surface of the plastic substrate is irradiated to expose at least a first accelerator. In an embodiment, irradiation may be achieved by exposing a portion of the surface of the plastic substrate by laser radiation. In an embodiment, a sufficient portion of the surface of the plastic substrate may be irradiated, optionally by laser, to expose at least one accelerator, and alternatively a plurality of accelerators. The laser instrument may be an infrared laser, such as a CO₂ laser marking system. In a non-limiting embodiment, the laser may have a wavelength ranging from about 157 nanometers to about 10.6 microns; a scanning speed of about 500 millimeters per second to about 8000 millimeters per second; a scanning step of about 3 microns to about 9 microns; a scan time delay of about 30 microseconds to about 100 microseconds; a frequency of about 30 kilohertz to about 40 kilohertz; a power of about 3 watt to about 4 watt; and/or a filling space of about 10 microns to about 50 microns. According to various embodiments of the present disclosure, the power of the laser may be sufficiently great to expose at least one accelerator, and alternatively a plurality of accelerators, but not so strong as to alter or damage the accelerators, or reduce the accelerators to metals.

In a non-limiting embodiment, the plastic substrate may have a thickness of about 500 microns, or more, and the depth of the irradiated portion of the plastic substrate may be about 20 microns, or less. In an embodiment, the areas without accelerators are not irradiated, and, without wishing to be bound by the theory, Applicant believes that those areas may have low deposition speed and poor adhesion. While, a few metals may deposit in these areas they may be easily removed by, for example and without limitation, ultrasonic cleaning. In this manner, Applicant believes, without wishing to be bound by such, that the metalization may be controlled in required areas in the surface of the plastic substrate.

In a further illustrative, non-limiting, embodiment, a flowing device may be applied to remove any mist generated, or introduced, during the irradiation process in the un-irradiated areas. Additionally, in various non-limiting embodiments, the plastic substrate may be ultrasonically cleaned after laser irradiation.

According to an embodiment of the disclosure, there are substantially no chemical plating deposits on the surface of the plastic substrate where no accelerators exist. Thus, the electroplating speed is very low with weak adhesive force. Even there are few chemical deposits, they may be removed easily. Thus, direct selective surface metalizing method may be achieved easily according to the present disclosure.

### First Plating

In an embodiment, after irradiation the accelerators may be exposed in the surface of the plastic substrate. A copper and/or nickel plating may be introduced onto at least some of the accelerators. Without wishing to be bound by the theory, Applicant believes that introducing the copper and/or nickel plating onto at least some of the accelerators may result in a strong relatively adhesion between the plastic substrate and the plating layers.

In a non-limiting embodiment, after laser irradiation the accelerator(s) may be exposed in the irradiated areas. Thereafter, copper-plating or nickel-plating may be applied to the accelerator(s). The copper-plating and nickel-plating are generally known to those of ordinary skill in the art, and may include contacting the irradiated plastic substrate with a copper-plating or a nickel-plating bath (described below). Without wishing to be bound by the theory, Applicant believes that the exposed accelerators may favor the copper or nickel ions, to be reduced to copper or nickel powders, which may cover the surface of the accelerators, and form a dense copper layer or nickel layer rapidly on the accelerators.

### Further Plating

In a non-limiting embodiment, following the first plating, one or more chemical, or electroplating, layers may be applied to the copper layer or nickel layer, or plate. For example, after a first nickel layer, or plating, may be formed on the surface(s) of the accelerator(s), a copper layer, or plating, may be chemical plated on the first nickel layer, or plate, and then a second nickel layer, or plate, may be chemically plated on the copper layer, or plate, to form a composite plastic article, having a layer, or plate, structure of Ni-Cu-Ni. Alternatively, an aurum layer may be flash layered, or plated, on the composite plastic article to form a plastic article having a layer, or plate, structure of Ni-Cu-Ni-Au.

In a further illustrative, non-limiting, embodiment, after a first copper layer, or plating, is formed on the surface(s) of the accelerator(s), a nickel layer, or plate, may be plated on the first copper layer, or plate, to form a layer, or plate, structure of Cu-Ni. Alternatively, an aurum layer may be flash layered, or plated, on the Cu-Ni layer, or plate, to form a layer, or plate, structure of Cu-Ni-Au.

In various non-limiting embodiments, the nickel layer, or plate, may have a thickness ranging from about 0.1 microns to about 50 microns, alternatively from about 1 micron to about 10 microns, and alternatively from about 2 microns to about 3 microns. The copper layer, or plate, may have a thickness ranging from about 0.1 microns to about 100 microns, alternatively from about 1 microns to about 50 microns, and alternatively from about 5 microns to about 30 microns. The aurum layer may have a thickness ranging from about 0.01 microns to about 10 microns, alternatively from about 0.01 microns to about 2 microns, and alternatively from about 0.1 microns to about 1 microns.

Chemical plating baths, electric solutions, and flash plating baths are generally known to those with ordinary skill in the art. In a non-limiting embodiment, the chemical plating bath for copper plating may comprise a copper salt and a reducer, with a pH value ranging from about 12 to about 13, wherein the reducer may reduce the copper ion to copper. The reducer may be selected from the group consisting of glyoxylic acids, hydrazines, sodium hypophosphites, and combinations thereof. In another embodiment, the chemical plating bath for copper plating may comprise 0.12 moles per liter ("mol/L") CuSO₄.5H₂O, 0.14 mol/L Na₂EDTA.2H₂O, 10 mol/L potassium ferrocyanide, 10 mg/L (milligram per liter) potassium ferrocyanide, 10 mg/L 2,2' bipyridine, and about 0.10 mol/L of glyoxylic acid (HCOCOOH), the bath having a pH of about 12.5 to about 13 adjusted by NaOH and H₂SO₄ solutions. In a non-limiting embodiment, the copper plating time may range from about 10 minutes to about 240 minutes. The chemical plating bath for nickel plating may comprise 23 grams per liter ("g/L") nickel sulfate, 18 g/L inferior sodium phosphate, 20 g/L lactic acid, 15 g/L malic acid, the bath having a pH of about 5.2 adjusted by a NaOH solution, and a temperature of about 85°C to about 90°C. In a non-limiting embodiment, the nickel plating time may range from about 8 minutes to about 15 minutes.

Aurum flash plating is generally known to those with ordinary skill in the art. In a non-limiting embodiment, the flash plating bath may be a BG-24 neutral aurum bath, which is commercially available from Shenzhen Jingyanchuang Chemical Company, located in Shenzhen, China.

Additional details of the present disclosure will be provided as follows by some embodiments of the present disclosure.

### Embodiment 1

A method for preparing a plastic article comprises the steps of:

a) CuFe_{0.5}B_{0.5}O_{2.5} was ball milled in a high speed ball grinder for about 10 hours to form a powder with an average diameter of about 700 nm; then PP, the CuFe_{0.5}B_{0.5}O_{2.5} powder, calcium silicate fiber, and antioxidant 1010 according to a weight ratio of about 100 : 10 : 30 : 0.2 were mixed in a high speed mixer to prepare a mixture; the mixture was extruded and granulated by a twin screw extruder available from Nanjing Rubber & Plastics Machinery Plant Co., Ltd., P. R. C. then injection molded to form a substrate of a circuit board for a LED (light emitting diode) lamp;

b) a metal circuit pattern was curved on the substrate by a DPF-M12 infrared laser available from Shenzhen TEC-H LASER Technology Co., Ltd., P. R. C. with a wavelength of about 1064 nm, a scanning speed of about 1000 mm/s, a scanning step size of about 9 µm, a scan time delay of about 30 µs, a frequency of about 40 KHz, a power of about 3 W, and a filled distance of about 50 µm; the surface of the plastic article was then ultrasonically cleaned; and

c) the substrate was immersed in a chemical nickel plating solution for about 10 min to form a first nickel layer with a thickness of about 3 µm; the substrate was immersed in a chemical copper plating solution for about 4 hours to form a copper layer with a thickness of about 13 µm on the first nickel layer; thereafter the substrate was immersed in the chemical nickel plating solution for about 10 min again to form a second nickel layer with a thickness of about 3 µm on the copper layer; then the plastic substrate was flash plated with an aurum layer with a thickness of about 0.03 µm on the second nickel layer to form the plastic article as the substrate for a circuit board of a LED lamp; where the copper plating solution was comprised of about 0.12 mol/L of CuSO₄·5H₂O, about 0.14 mol/L of Na₂EDTA·2H₂O, about 10 mg/L of potassium ferrocyanide, about 10 mg/L of 2,2'-bipyridine, and about 0.10 mol/L of glyoxylic acid (HCOCOOH), with a PH value of about 12.5 to about 13 adjusted by NaOH and H₂SO₄; the nickel plating solution was comprised of about 23 g/L of nickel sulfate, about 18 g/L of sodium hypophosphite, about 20 g/L of lactic acid, about 15 g/L of malic acid, with a PH value of about 5.2 adjusted by NaOH; and the aurum strike plating solution was BG-24 neutral aurum plating solution commercially available from Shenzhen Jingyanchuang Chemical Company, P. R. C. Embodiment 2 (not forming part of the present invention)

The method in Embodiment 2 is substantially similar in all respects to that in Embodiment 1, with the exception of:

in step a), CuB₂O₄ was ball milled to form a powder with an average diameter of about 800 nm; the powder was dried and mixed with PEEK resin, glass fiber, and antioxidant 168 according to a weight ratio of about 20 :100 : 30 : 0.2 in a high speed ball grinder to prepare a mixture; the mixture was extruded and granulated then injection molded to form a shell; and

in step c), the shell was immersed in a chemical nickel plating solution for about 8 min to form a nickel layer with a thickness of about 2 µm; the shell was immersed in a chemical copper plating bath for about 3 hours to form a copper layer with a thickness of about 13 µm on the first nickel layer; then the shell was immersed in the chemical nickel plating solution for about 10 min again to form a second nickel layer with a thickness of about 3 µm on the copper layer; and then the plastic substrate was flash plated with an aurum layer with a thickness of about 0.03 µm on the second nickel layer to form the plastic article as a shell for an electronic connector shell of an automobile motor.

### Embodiment 3 (not forming part of the present invention)

The method in Embodiment 3 is substantially similar in all respects to that in Embodiment 1, with the exception of:

in step a), CuWO₄ was ball milled to form a powder with an average diameter of about 800 nm; the powder was dried and mixed with PES resin, CuWO₄, potassium titanate whisker, antioxidant 1010, and polyethylene wax according to a weight ratio of about 10 :100 : 30 : 0.2 : 0.1 in a high speed ball grinder to prepare a mixture; the mixture was extruded and granulated then injection molded to form a shell; and

in step c), the shell was immersed in a chemical copper plating solution for about 3 hours to form a copper layer with a thickness of about 5 µm; then the shell was immersed in a chemical nickel plating solution for about 10 min to form a nickel layer with a thickness of about 3 µm on the copper layer, thus forming the plastic article as a shell for an electronic connector.

### Embodiment 4 (not forming part of the present invention)

The method in Embodiment 4 is substantially similar in all respects to that in Embodiment 1, with the exception of:

in step a), CuMo_{0.5}O_{2.5} was ball milled to form a powder with an average diameter of about 900 nm; the powder was dried and mixed with PC resin, CuMo_{0.5}O_{2.5}, antioxidant 1076, and polyethylene wax according to a weight ratio of about 10 :100 : 0.2 : 0.1 in a high speed ball grinder to prepare a mixture; the mixture was extruded and granulated then blow molded to form a shell; and

in step c), the shell was immersed in a chemical nickel plating solution for about 10 min again to form a first nickel layer with a thickness of about 3 µm; the shell was immersed in a chemical copper plating solution for about 2 hours to form a copper layer with a thickness of about 10 µm on the first nickel layer; then the shell was immersed in a chemical nickel plating solution for about 12 min again to form a second nickel layer with a thickness of about 4 µm on the copper layer; thus forming the plastic article as a shell for an electronic part of an automobile.

### Embodiment 5

The method in Embodiment 5 is substantially similar in all respects to that in Embodiment 1, with the exception of:

in step a), CuNi_{o.5}B_{0.5}O_{2.5} was ball milled to form a powder with an average diameter of about 900 nm; the powder was dried and mixed with PPO resin, CuNi_{0.5}B_{0.5}O_{2.5}, calcium silicate fiber, antioxidant 1076, and polyethylene wax according to a weight ratio of about 10 :100 : 10 : 0.2 : 0.1 in a high speed ball grinder to prepare a mixture; the mixture was extruded and granulated by a twin screw extruder then injection molded to form a shell; and

in step c), the shell was immersed in a chemical nickel plating solution for about 8 min to form a nickel layer with a thickness of about 2 µm; the shell was immersed in a chemical copper plating bath for about 4 hours to form a copper layer with a thickness of about 15 µm on the first nickel layer; then the shell was immersed in the chemical nickel plating solution for about 10 min again to form a second nickel layer with a thickness of about 3 µm on the copper layer; and the shell was flash plated with an aurum layer with a thickness of about 0.03 µm on the second nickel layer; thus forming the plastic article as a shell for an outdoor connector of a solar cell.

### Embodiment 6

A method for preparing a plastic article comprises the steps of:

a) 58 g of CuO, about 34 g of Ga₂O₃, and about 14 g of B₂O₃ powder were mixed uniformly; the powder was ball milled in distilled water in a high speed ball grinder for about 12 hours to form a mixture; then the mixture was dried and calcined at a temperature of about 1000°C for about 2 hours to form particles; the particles were ball milled at a high speed until the average diameter of the particles reached up to about 900 nm; the particles were tested by X-ray Diffraction (XRD) and ICP-AES to obtain a composition of CuGa_{0.5}B_{0.5}O_{2.5};

b) PPS resin, CuGa_{0.5}B_{0.5}O_{2.5} particles, antioxidant 1076, and polyethylene wax were mixed according to a weight ratio of about 100 : 10 : 0.2 : 0.1 to form a mixture; the mixture was extruded and granulated then injection molded to form a shell;

c) a metal circuit pattern was curved on the shell by a method substantially similar to that in step b) of Embodiment 1; and

d) the plating step is substantially similar in all respects to step c) of Embodiment 1, with the exception of: the shell was immersed in a chemical copper plating solution for about 3 h to form a copper layer with a thickness of about 12 µm; thereafter, the shell was immersed in a chemical nickel plating bath for about 10 min to form a nickel layer with a thickness of about 3 µm on the first copper layer; thus forming the plastic article as a shell for an electric connector.

### Embodiment 7 (not forming part of the present invention)

A method for preparing a plastic article comprises the steps of:

a) 36 g of CuO, and about 65 g of MoO₃ powders were mixed uniformly; the powders were ball milled in distilled water in a high speed ball grinder for about 12 hours to form a mixture; the mixture was dried then calcined at a temperature of about 800°C for about 2 hours to from particles; the particles were ball milled until the average diameter reaches about 900 nm; the particles were tested by XRD and obtained a composition of CuMoO₄;

PA6T resin, CuMoO₄, antioxidant 1076, and polyethylene wax were mixed according to a weight ratio of about 100 : 10 : 0.2 : 0.1 to form a mixture; the mixture was extruded and granulated then injection molded to form a shell;

c) a metal circuit pattern was curved on the shell by a method substantially similar to that in step b) of Embodiment 1; and

d) the plating step was substantially similar in all respects to step c) of Embodiment 3 with the exception of: the shell was immersed in a chemical nickel plating solution for about 8 min to form a nickel layer with a thickness of about 2 µm; the shell was immersed in a chemical copper plating solution for about 14 h min to form a copper layer with a thickness of about 15 µm on the nickel layer; then the shell was immersed in a chemical nickel plating solution for about 10 min to form a nickel layer with a thickness of about 3 µm on the copper layer; and the shell was flash plated with an aurum layer with a thickness of about 0.03 µm on the nickel layer; thus forming the plastic article as a shell for an outdoor connector of a automobile.

Although explanatory embodiments have been shown and described, it would be appreciated by those skilled in the art that changes, alternatives, and modifications all falling into the scope of the present invention as defined by the claims.

## Claims

1. A method of metalizing a plastic substrate comprising:
providing a plastic substrate comprising a plastic and at least one accelerator dispersed in the plastic, the at least one accelerator being selected from compounds according to the general formula AMₓB_{y}O_{z}, wherein A is one or more elements selected from groups 10 and 11 of the Element Periodic Table; M is one or more metal elements in three plus selected from the group consisting of Fe, Co, Mn, Al, Ga, In, TI, and rare earth elements; and O is oxygen; and x=0-2, y=0.01-2; z=1-4; and excluding CuB₂O₄ and NiB₂O₄;
irradiating a surface of the plastic substrate to expose at least a first accelerator;
plating the irradiated surface of the plastic substrate to form at least a first metal layer on the irradiated surface; and
plating the first metal layer to form at least a second metal layer on the first metal layer.

2. The method of Claim 1, wherein the accelerator is evenly distributed throughout the plastic.

3. The method of Claim 1 or 2, wherein the irradiated surface of the plastic substrate is copper-plated or nickel-plated.

4. The method of one of the preceding Claims, wherein the first metal layer is electroplated or chemical plated.

5. The method of one of the preceding Claims, wherein the plastic substrate is provided by a molding process selected from a group consisting of injection molding, blow molding, extraction molding, and hot press molding.

6. The method of one of the preceding Claims, wherein the surface of the plastic substrate is irradiated by exposure to a laser radiation.

7. The method of Claim 6, wherein the laser radiation has a wave length of about 157 nanometers to about 10.6 micrometer, a scanning speed of about 500 millimeters per second to about 8000 millimeters per second, a scanning step of about 3 micrometer to about 9 micrometer, a delaying time of about 30 microseconds to about 100 microseconds, a frequency of about 30 kilohertz to about 40 kilohertz, a power of about 3 watt to about 4 watt, and/or a filling space of about 10 micrometer to about 50 micrometer.

8. The method of one of the preceding Claims, wherein the metal layers have a structure selected from the group consisting of Ni-Cu-Ni; Ni-Cu-Ni-Au; Cu-Ni; and Cu-Ni-Au.

9. The method of Claim 8, wherein the nickel layers each have a thickness ranging from about 0.1 micrometer to about 50 micrometer; the copper layers each have a thickness ranging from about 0.1 micrometer to about 100 micrometer; and the aurum layers each have a thickness ranging from about 0.01 micrometers to about 10 micrometers.

10. The method of one of the preceding Claims, wherein the at least one accelerator has an average diameter ranging from about 20 nanometers to about 100 micrometers, in particular ranging from about 50 nanometers to about 10 micrometers, preferably ranging from about 200 nanometers to about 4 micrometers.

11. The method of one of the preceding Claims, wherein the accelerator according to the general formula AMₓB_{y}O_{z} is selected from the group consisting of: CUFe_{0,5}B_{0.5}O_{2.5}, CuNi_{0.5}B_{0.5}O_{2.5}, CuAl_{0.5}B_{0.5}O_{2.5}, CuGa_{0.5}B_{0.5}O_{2.5}, and CuB_{0.7}O₂.

12. The method of one of the preceding Claims, wherein the plastic is a thermoplastic plastic, particularly selected from the group consisting of polyolefins, polycarbonates, polyesters, polyamides, polyaromatic ethers, polyester-imides, polycarbonate/acrylonitrile-butadiene-styrene composite, polyphenylene oxide, polyphenylene sulfide, polyimides, polysulfones, poly (ether ether ketone), polybenzimidazole, liquid crystalline polymer and any combination thereof; or the plastic is a thermoset plastic, particularly selected from the group consisting of phenolic resin, urea-formaldehyde resin, melamine-formaldehyde resin, epoxy resin, alkyd resin, polyurethane and any combination thereof.

13. The method of one of the preceding Claims, wherein the plastic substrate contains about 1 wt% to about 40 wt% of the at least one accelerator, in particular about 1 wt% to about 30 wt%, preferably about 2 wt% to about 15 wt%.

14. The method of one of the preceding Claims, wherein the plastic substrate further comprises at least one additive selected from the group consisting of: an antioxidant, a light stabilizer, a lubricant, and inorganic fillers.

15. A plastic article producible by a method according to one of claims 1 to 14 comprising: a plastic substrate comprising a plastic and at least one accelerator, at least a first metal layer and a second metal layer plated onto the plastic substrate, wherein the at least one accelerator is selected from compounds according to the general formula: AMₓB_{y}O_{z}, wherein A is one or more elements selected from groups 10 and 11 of the Element Periodic Table; M is one or more metal elements in three plus selected from the group consisting of Fe, Co, Mn, Al, Ga, In, TI, and rare earth elements; and O is oxygen; and x=0-2, y=0.01-2; z=1-4; and excluding CuB₂O₄ and NiB₂O₄.

## Patentansprüche

1. Verfahren zur Metallisierung eines Kunststoffsubstrats, aufweisend:
Bereitstellen eines Kunststoffsubstrats, das einen Kunststoff und zumindest einen im Kunststoff dispergierten Beschleuniger aufweist, wobei der zumindest eine Beschleuniger aus Verbindungen gemäß der allgemeinen Formel AMₓB_{y}O_{z} ausgewählt ist, wobei A ein oder mehrere Elemente ausgewählt aus den Gruppen 10 und 11 des Periodensystems der Elemente ist; M ein oder mehrere Metallelemente in der Oxidationsstufe 3+ ausgewählt aus der Gruppe bestehend aus Fe, Co, Mn, Al, Ga, In, Tl und Elementen der Seltenen Erden ist; O Sauerstoff ist; und x=0-2, y=0,01-2; z=1-4; und wobei CuB₂O₄ und NiB₂O₄ ausgeschlossen sind;
Bestrahlen einer Oberfläche des Kunststoffsubstrats zum Freilegen zumindest eines ersten Beschleunigers;
Metallisieren der bestrahlten Oberfläche des Kunststoffsubstrats zum Ausbilden zumindest einer ersten Metallschicht auf der bestrahlten Oberfläche; und
Metallisieren der ersten Metallschicht zum Ausbilden zumindest einer zweiten Metallschicht auf der ersten Metallschicht.

2. Verfahren nach Anspruch 1, wobei der Beschleuniger gleichmäßig in dem gesamten Kunststoff verteilt ist.

3. Verfahren nach Anspruch 1 oder 2, wobei die bestrahlte Oberfläche des Kunststoffsubstrats verkupfert oder vernickelt wird.

4. Verfahren nach einem der vorhergehenden Ansprüche, wobei die erste Metallschicht galvanisch oder chemisch metallisiert wird.

5. Verfahren nach einem der vorhergehenden Ansprüche, wobei das Kunststoffsubstrat durch ein Formungsverfahren bereitgestellt wird, das aus einer Gruppe bestehend aus Spritzgießen, Blasformen, Extraktionsformen und Heißpressformen ausgewählt ist.

6. Verfahren nach einem der vorhergehenden Ansprüche, wobei die Oberfläche des Kunststoffsubstrats bestrahlt wird, indem sie einer Laserstrahlung ausgesetzt wird.

7. Verfahren nach Anspruch 6, wobei die Laserstrahlung eine Wellenlänge von etwa 157 Nanometern bis etwa 10,6 Mikrometern, eine Abtastgeschwindigkeit von etwa 500 Millimetern pro Sekunde bis etwa 8000 Millimetern pro Sekunde, eine Abtastschrittweite von etwa 3 Mikrometern bis etwa 9 Mikrometern, eine Verzögerungszeit von etwa 30 Mikrosekunden bis etwa 100 Mikrosekunden, eine Frequenz von etwa 30 Kilohertz bis etwa 40 Kilohertz, eine Leistung von etwa 3 Watt bis etwa 4 Watt und/oder einen Füllraum von etwa 10 Mikrometern bis etwa 50 Mikrometern aufweist.

8. Verfahren nach einem der vorhergehenden Ansprüche, wobei die Metallschichten eine Struktur aufweisen, die aus der Gruppe bestehend aus Ni-Cu-Ni, Ni-Cu-Ni-Au, Cu-Ni und Cu-Ni-Au ausgewählt ist.

9. Verfahren nach Anspruch 8, wobei die Nickelschichten jeweils eine Dicke im Bereich von etwa 0,1 Mikrometern bis etwa 50 Mikrometern aufweisen; die Kupferschichten jeweils eine Dicke im Bereich von etwa 0,1 Mikrometern bis etwa 100 Mikrometern aufweisen; und die Goldschichten jeweils eine Dicke im Bereich von etwa 0,01 Mikrometern bis etwa 10 Mikrometern aufweisen.

10. Verfahren nach einem der vorhergehenden Ansprüche, wobei der zumindest eine Beschleuniger einen durchschnittlichen Durchmesser im Bereich von etwa 20 Nanometern bis etwa 100 Mikrometern, insbesondere im Bereich von etwa 50 Nanometern bis etwa 10 Mikrometern, vorzugsweise im Bereich von etwa 200 Nanometern bis etwa 4 Mikrometern aufweist.

11. Verfahren nach einem der vorhergehenden Ansprüche, wobei der Beschleuniger gemäß der allgemeinen Formel AMₓB_{y}O_{z} aus der Gruppe bestehend aus: CuFe_{0,5}B_{0,5}O_{2,5}, CuNi_{0,5}B_{0,5}O_{2,5}, CuAl_{0,5}B_{0,5}O_{2,5}, CuGa_{0,5}B_{0,5}O_{2,5} und CuB_{0,7}O₂ ausgewählt ist.

12. Verfahren nach einem der vorhergehenden Ansprüche, wobei der Kunststoff ein thermoplastischer Kunststoff ist, der insbesondere aus der Gruppe bestehend aus Polyolefinen, Polycarbonaten, Polyestern, Polyamiden, polyaromatischen Ethern, Polyesterimiden, Polycarbonat/Acrylnitril-Butadien-Styrol-Komposit, Polyphenylenoxid, Polyphenylensulfid, Polyimiden, Polysulfonen, Poly(ether-ether-keton), Polybenzimidazol, Flüssigkristallpolymer und einer Kombination derselben ausgewählt ist; oder der Kunststoff ein wärmehärtender Kunststoff ist, der insbesondere aus der Gruppe bestehend aus Phenolharz, Urea-Formaldehyd-Harz, Melamin-Formaldehyd-Harz, Epoxidharz, Alkydharz, Polyurethan und einer Kombination derselben ausgewählt ist.

13. Verfahren nach einem der vorhergehenden Ansprüche, wobei das Kunststoffsubstrat etwa 1 Gew.-% bis etwa 40 Gew.-% des zumindest einen Beschleunigers, insbesondere etwa 1 Gew.-% bis etwa 30 Gew.-%, vorzugsweise etwa 2 Gew.-% bis etwa 15 Gew.-%, enthält.

14. Verfahren nach einem der vorhergehenden Ansprüche, wobei das Kunststoffsubstrat weiterhin zumindest ein Additiv aufweist, das aus der Gruppe bestehend aus einem Antioxidans, einem Lichtstabilisator, einem Schmiermittel und anorganischen Füllstoffen ausgewählt ist.

15. Kunststoffartikel, herstellbar durch ein Verfahren nach einem der Ansprüche 1 bis 14, aufweisend: ein Kunststoffsubstrat, das einen Kunststoff und zumindest einen Beschleuniger aufweist, zumindest eine erste Metallschicht und eine zweite Metallschicht, die auf das Kunststoffsubstrat plattiert ist, wobei der zumindest eine Beschleuniger aus Verbindungen gemäß der allgemeinen Formel AMₓB_{y}O_{z} ausgewählt ist, wobei A ein oder mehrere Elemente ausgewählt aus den Gruppen 10 und 11 des Periodensystems der Elemente ist; M ein oder mehrere Metallelemente in der Oxidationsstufe 3+ ausgewählt aus der Gruppe bestehend aus Fe, Co, Mn, Al, Ga, In, Tl und Elementen der Seltenen Erden ist; und O Sauerstoff ist; und x=0-2, y=0,01-2; z=1-4; und wobei CuB₂O₄ und NiB₂O₄ ausgeschlossen sind.

## Revendications

1. Procédé de métallisation d'un substrat en plastique, comprenant:
prévoir un substrat en plastique comprenant une matière plastique et au moins un accélérateur dispersé dans la matière plastique, l'au moins un accélérateur étant sélectionné parmi des composés selon la formule générale AMₓB_{y}O_{z}, A étant un ou plusieurs éléments sélectionnés parmi les groupes 10 et 11 du tableau périodique des éléments ; M étant un ou plusieurs éléments métalliques dans l'état d'oxydation 3+ sélectionnés dans le groupe constitué de Fe, Co, Mn, Al, Ga, In, Tl et des éléments de terres rares ; et O étant de l'oxygène ; et x=0-2, y=0,01-2 ; z=1-4 ; et à l'exclusion de CuB₂O₄ et NiB₂O₄ ;
irradier une surface du substrat en plastique pour exposer au moins un premier accélérateur ;
plaquer la surface irradiée du substrat en plastique pour former au moins une première couche métallique sur la surface irradiée ; et
plaquer la première couche métallique pour former au moins une deuxième couche métallique sur la première couche métallique.

2. Procédé selon la revendication 1, dans lequel l'accélérateur est distribué régulièrement sur l'ensemble de la matière plastique.

3. Procédé selon les revendications 1 ou 2, dans lequel la surface irradiée du substrat en plastique est cuivrée ou nickelée.

4. Procédé selon l'une des revendications précédentes, dans lequel la première couche métallique est plaquée par électrolyse ou plaquée de façon chimique.

5. Procédé selon l'une des revendications précédentes, dans lequel le substrat en plastique est obtenu par un procédé de moulage sélectionné dans un groupe constitué de moulage par injection, moulage par soufflage, moulage par extraction et moulage par pressage à chaud.

6. Procédé selon l'une des revendications précédentes, dans lequel la surface du substrat en plastique est irradiée par l'exposition à un rayonnement laser.

7. Procédé selon la revendication 6, dans lequel le rayonnement laser a une longueur d'onde d'environ 157 nanomètres à environ 10,6 micromètres, une vitesse de balayage d'environ 500 millimètres par seconde à environ 8000 millimètres par seconde, une taille du pas de balayage d'environ 3 micromètres à environ 9 micromètres, un temps de délai d'environ 30 microsecondes à environ 100 microsecondes, une fréquence d'environ 30 kilohertz à environ 40 kilohertz, une puissance d'environ 3 watts à environ 4 watts, et/ou un espace de remplissage d'environ 10 micromètres à environ 50 micromètres.

8. Procédé selon l'une des revendications précédentes, dans lequel les couches métalliques ont une structure sélectionnée dans le groupe constitué de Ni-Cu-Ni, Ni-Cu-Ni-Au, Cu-Ni, et Cu-Ni-Au.

9. Procédé selon la revendication 8, dans lequel les couches de nickel ont respectivement une épaisseur dans la plage d'environ 0,1 micromètres à environ 50 micromètres ; les couches de cuivre ont respectivement une épaisseur dans la plage d'environ 0,1 micromètres à environ 100 micromètres ; et les couches d' or ont respectivement une épaisseur dans la plage d'environ 0,01 micromètres à environ 10 micromètres.

10. Procédé selon l'une des revendications précédentes, dans lequel l'au moins un accélérateur a un diamètre moyen dans la plage d'environ 20 nanomètres à environ 100 micromètres, en particulier dans la plage d'environ 50 nanomètres à environ 10 micromètres, de préférence dans la plage d'environ 200 nanomètres à environ 4 micromètres.

11. Procédé selon l'une des revendications précédentes, dans lequel l'accélérateur selon la formule générale AMₓB_{y}O_{z} est sélectionné dans le groupe constitué de : CuFe_{0,5}B_{0,5}O_{2,5}, CuNi_{0,5}B_{0,5}O_{2,5}, CuAl_{0,5}B_{0,5}O_{2,5}, CuGa_{0,5}B_{0,5}O_{2,5} et CuB_{0,7}O₂.

12. Procédé selon l'une des revendications précédentes, dans lequel la matière plastique est une matière plastique thermoplastique, en particulier sélectionnée dans le groupe constitué de polyoléfines, polycarbonates, polyesters, polyamides, éthers poly-aromatiques, polyester-imides, un composite de polycarbonate/acrylonitrile/butadiène-styrène, oxyde de polyphénylène, sulfure de polyphénylène, polyimides, polysulfones, polyétheréthercétone, polybenzimidazole, un polymère à cristaux liquides et une combinaison de ceux-ci ; ou la matière plastique étant une matière plastique thermoplastique, en particulier sélectionnée dans le groupe constitué de résine phénolique, résine d'urée formaldéhyde, résine de mélamine formaldéhyde, résine epoxyde, résine alkyde, polyuréthane et une combinaison de ceux-ci.

13. Procédé selon l'une des revendications précédentes, dans lequel le substrat en plastique contient environ 1 % en poids à environ 40 % en poids de l'au moins un accélérateur, en particulier environ 1 % en poids à environ 30 % en poids, de préférence environ 2 % en poids à environ 15 % en poids.

14. Procédé selon l'une des revendications précédentes, dans lequel le substrat en plastique comprend en outre au moins un additif sélectionné dans le groupe constitué d'un antioxydant, un stabilisant lumière, un lubrifiant et des charges inorganiques.

15. Article plastique, pouvant être fabriqué par un procédé selon l'une des revendications 1 à 14, comprenant : un substrat en plastique comprenant une matière plastique et au moins un accélérateur, au moins une première couche métallique et une deuxième couche métallique plaquée sur le substrat en plastique, l'au moins un accélérateur étant sélectionné parmi des composés selon la formule générale AMₓB_{y}O_{z}, A étant un ou plusieurs éléments sélectionnés parmi les groupes 10 et 11 du tableau périodique des éléments ; M étant un ou plusieurs éléments métalliques dans l'état d'oxydation 3+ sélectionnés dans le groupe constitué de Fe, Co, Mn, Al, Ga, In, Tl et des éléments de terres rares ; et O étant de l'oxygène ; et x=0-2, y=0,01-2 ; z=1-4 ; et à l'exclusion de CuB₂O₄ et NiB₂O₄.
